# EUROPEAN PATENT APPLICATION

(11) **EP 3 181 454 A1**
(43) Date of publication of application: **21.06.2017**
(21) Application number: 15382626.8
(22) Date of filing: 15.12.2015
(51) Int. Cl.: B64D 27/14

(54) **AIRCRAFT PYLON ASSEMBLY**

(71) Applicant: Airbus Operations, S.L., 28906 Getafe (Madrid) (ES)
(72) Inventor: MENARD, Edouard, 28906 GETAFE (Madrid) (ES)
(74) Representative: Carpintero Lopez, Francisco

(57) **Abstract**

The present invention refers to a pylon assembly (7) for attaching engines (2) to an aircraft fuselage (8), the pylon assembly (7) comprising first and second elongated boxes (7a,7b), aligned longitudinally with respect to an axis (X) and assembled to each other, wherein the first box (7a) has an outer section (7ao) and an inner section (7ai), the inner section (7ai) having a tubular configuration, wherein the second box (7b) has an outer section (7bo) and an inner section (7bi), wherein the inner section is inserted inside the inner section of the first box. First and second boxes (7a,7b) are configured such as the inner section of the second box is tightly fitted inside the inner section of the first box, thereby in the mechanical coupling between the two boxes is achieved simply by the tight contact between the two boxes, without the need of fastenings for load transfer.

## Description

### Object of the invention

The present invention refers in general to the construction and design of torsion boxes, for aircraft lifting surfaces, pylons etc. More in particular, the invention refers to a pylon assembly for attaching engines to an aircraft fuselage, preferably for the installation of engines at rear fuselages.

An object of the invention is to provide a pylon structure which requires for its assembly a reduced number of fastening points, such as its installation at the final assembly line can be completed faster and easier than traditional pylons.

### Background of the invention

Some types of commercial aircrafts are powered by engines located at the rear section of the aircraft, such as the engines are supported by horizontal pylons attached to the aircraft fuselage.

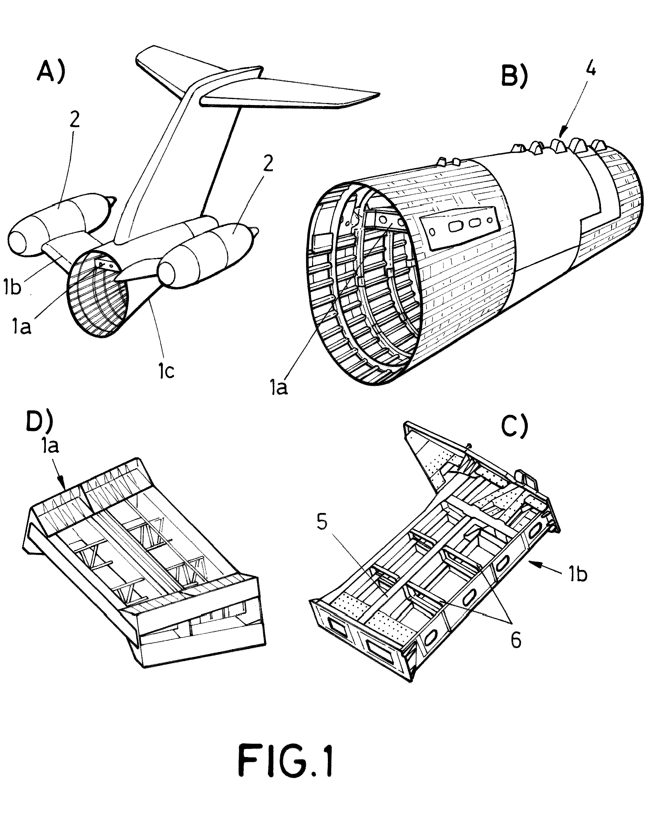

Figure 1 shows a known configuration of pylons (1) for installing engines (2) at the rear section (3) of an aircraft. These pylons include a central box (1a) located inside the aircraft fuselage (4), and two lateral boxes (1b, 1c) respectively fitted at each side of the central box (1a). These boxes (1a-1c) are highly loaded structural elements and as such, are provided internally with spars (5) and ribs (6).

One of the drawbacks of these classical pylons architectures, is that the installation of the pylons, especially in the case of three boxes pylons, is that is attachment with the aircraft fuselage require a large number of fasteners, and since this task is normally carried out manually, the installation process is slow and time consuming, and therefore costly.

### Summary of the invention

The present invention is defined in the attached independent claims, and overcomes the above-mentioned drawbacks of the prior art, by providing an aircraft pylon assembly comprising first and second torsion boxes aligned longitudinally with respect to an axis (X) and configured such as the two boxes can telescopically be coupled to each other to configure the pylon.

First and second boxes are configured such as an inner section of the second box can slide into the first box, and that inner section is tightly fitted inside an inner section of the first box, in such a way that any relative angular movement between the two boxes with respect to the axis X, is impeded. The inner section of the first box has a tubular (or empty) configuration defining a chamber in its interior, and in turn the outer configuration of the second box inner section, has substantially the same configuration of that chamber.

Unlike prior art pylons that rely on fastening for the assembly and load transfer between boxes, in the present invention the mechanical coupling between the two boxes of the pylon for the loads transfer, is achieved simply by the tight contact between the two boxes, without the need of fastenings.

A single row of two or more fasteners joining the two boxes at the overlap section, are preferably used only with the purpose of positioning correctly the two boxes and prevent longitudinal sliding.

First and second boxes are also configured such as a relative twist movement between the boxes about the axis (X) is prevented. For that purpose, preferably, the inner section of the first box and the inner section of the second box, are configured as parallelepipeds or trapezoids, having a constant area and dimensions through the zone of overlap.

The invention also refers to an aircraft fuselage section, comprising at least two frames and the pylon assembly previously described attached to the frames, wherein the overlapped inner sections of the first and second boxes, are placed at the interior of the fuselage section.

The invention can also be applied for the assembly of torsion or torque boxes of aircraft wings or horizontal tail planes or canard configuration.

### Brief description of the drawings

Preferred embodiments of the invention, are henceforth described with reference to the accompanying drawings, wherein:
Figure 1.- shows several perspective views of a pylon architecture of the prior art formed by three boxes, wherein drawing (A) shows an aircraft rear section; drawing (B) shows the fuselage; drawing (C) shows a lateral box; and drawing (D) shows the central box.
Figure 2.- shows several perspective views of a preferred embodiment of a pylon assembly according to the invention, wherein drawing (A) shows the first box; drawing (B) shows the second box and drawing (C) shows the two boxes coupled to each other, with the upper part of the boxes removed for the sake of clarity of the illustration. An aircraft fuselage contour is represented by a spiral thin line. Arrows in drawing (C) indicate the movement for coupling the two boxes during its assembly.
Figure 3.- shows in drawing (A) an elevational view of the pylon assembly coupled to a fuselage section; and drawing (B) is a cross-sectional view taken along plane A-A in drawing (4).
Figure 4.- shows several perspective views, wherein drawing (A) shows first and second boxes assembled together and attached to a frame of a fuselage; drawing (B) shows the first box attached to a frame of a fuselage, and wherein the second box is partially cut-off to illustrate the tight fitting between the two boxes.
Figure 5.- shows in drawing (A) a perspective view of the pylon assembly attached fuselage frames; and drawing (B) shows two frames of the fuselage and ancillary support elements for receiving and attaching the pylon assembly.

### Preferred embodiment of the invention

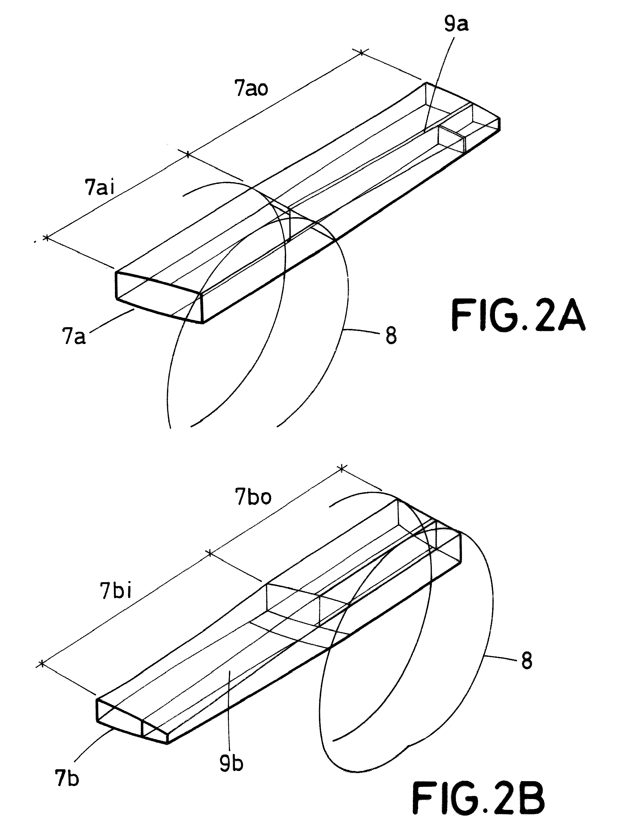

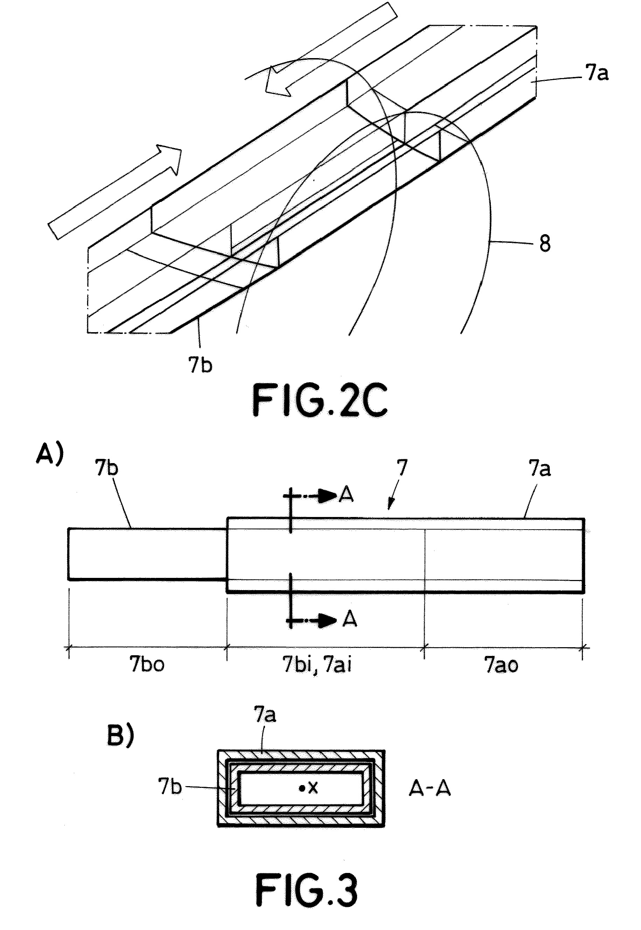

Figure 2 shows a preferred embodiment of a pylon assembly (7) according to the invention, comprising a first box (7a) and a second box (7b) aligned longitudinally along an axis (X) and assembled to each other.

The first box (7a) is an elongated body having an outer section (7ao) and an inner section (7ai), wherein the inner section (7ai) has a tubular configuration. The first box (7a) has a first spar (9a) internally fitted thereto and extending longitudinally. This first spar (9a) is shorter than the first box (7a) and extends the outer end of the first box.

Similarly, the second box (7b) has an outer section (7bo) and an inner section (7bi), and a second spar (9b) internally fitted thereto, however in this case the second spar (9a) extends preferably from one end to end of the second box (7b), at least through the inner section (7bi).

The inner section (7bi) of the second box is inserted inside the tubular inner section (7ai) of the first box (7a). First and second boxes (7a,7b) are configured such as the inner section (7bi) of the second box (7b) is tightly fitted inside the inner section (7ai) of the first box (7a). To achieve that tight fit or coupling between the two boxes, the three dimensional outer configuration of the inner section (7bi), is substantially similar to the three dimensional configuration of the chamber defined by the tubular inner section (7ai) of the first box.

Preferably, the cross-sectional shape of the two inner sections (7ai,7bi) has four sides, preferably rectangular or trapezoidal. Figure 3 illustrates in more detail the tight coupling between the two boxes (7a,7b), wherein it would be noted that the two inner sections (7ai,7bi) are configured as parallelepipeds, having the same area and size throughout the section of overlap, such first and second boxes can be coupled telescopically. The boxes are dimensioned such as the second box (7b) can slide into the first box (7a) with the minimum gap between boxes, but at the same time the outer surface of the inner section (7bi), at least a major part of it, and the inner surface of the inner section (7a1) are overlapped and in contact.

With this assembly between boxes, not only the relative angular movement between the first and second boxes (7a,7b) with respect to the axis (X) is prevented, but also a relative twist or torsion movement between boxes about the axis (X) is impeded.

In this way, the loads between the two boxes are transferred merely by the contact between surfaces of the inner sections (7ai,7bi,) respectively of the first and second boxes (7a,7b), without the need of fastening means, such as the assembly time at the final assembly line is significantly reduced.

Additionally, first and second spars (9a,9b) are longitudinally aligned at the pylon assembly as shown in figure 2C, can be linked to each other (optional).

It would be noted, especially in drawing 3A that when the pylon assembly (7) is installed in an aircraft fuselage (8), the section of overlap between boxes, that is, the inner sections (7ai,7bi,) are placed at the interior of the fuselage section (8). The interior end of the first spar (9a) is placed at the aircraft fuselage skin.

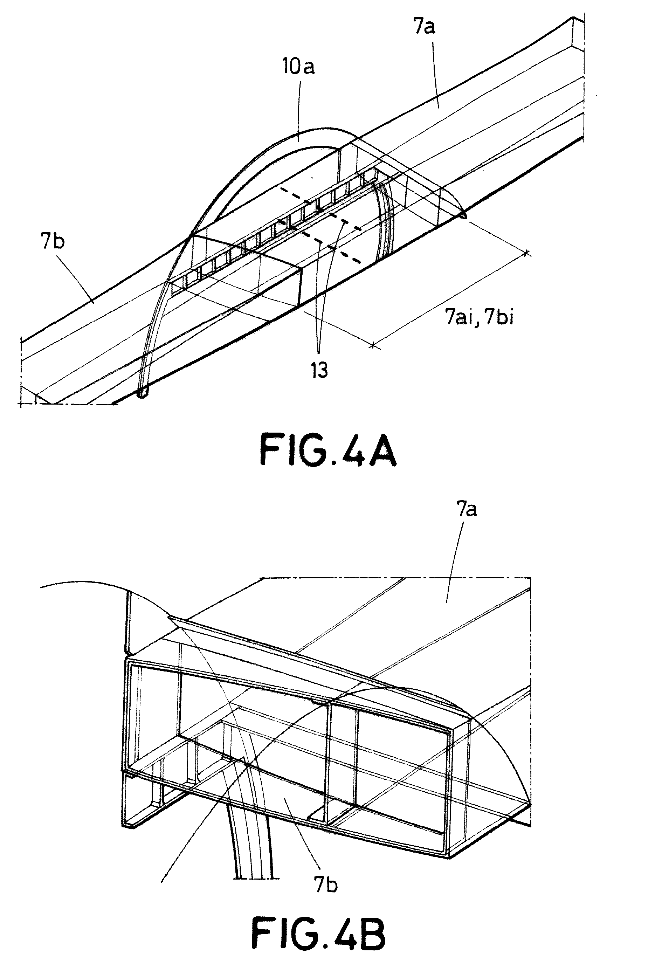

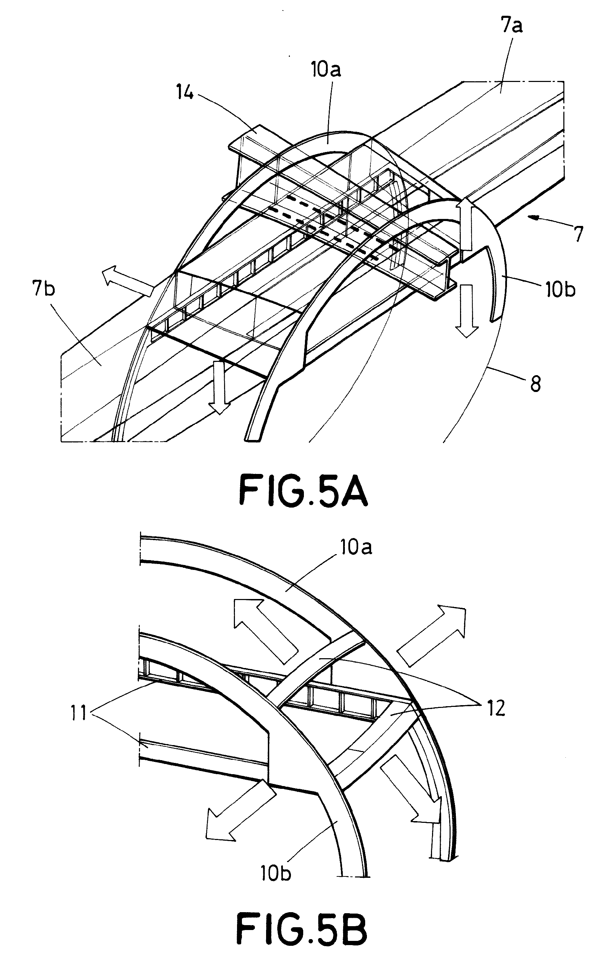

Figures 4 and 5 show with more detail the attachment of the pylon assembly (7) with an aircraft fuselage section (8), which is usually located at an upper region of the fuselage (8).

Typically the skeleton of the aircraft fuselage (8) is formed by a plurality of frames which are ring-shaped structural elements. The pylon assembly (7) is conventionally installed between two consecutive frames (10a,10b), and a pair of transversal members (supports) (11) and two pair of longitudinal trusts (12) as shown in drawing 5B. Frames and struts have primary function of transferring loads to fuselage. Additional intermediate frames and struts/trusts are possible and usually necessary for redundancy purposes.

Alternatively, pylon support can be achieved a beam (14) at each side of the fuselage can be installed for supporting the pylon assembly (7). This beam can replace the upper longitudinal supports (12). Beam (14) is supported at the frames. This option gives the additional advantage that outer surfaces located between beam and pylon upper surface can be aerodynamic fairings, which are easier for removal and access or inspection of main components.

Rows of fasteners (13) are applied at the inner sections (7ai,7bi,) to join the two boxes, (see drawing 4B), only with the purpose of preventing the first and second boxes from sliding longitudinally in direction of the axis (X).

The pylon assembly (7) is obtained from a carbon fiber composite material, preferably Carbon Fiber Reinforced Plastic (CFRP), either by means of a pre-preg or a Resin Transfer Moulding (RTM) process. First and second boxes are manufactured independently, having respectively spars and ribs pre-cured, and upper, lower and side skins layered up around.

In practice, a propulsion unit based on any type engine, would be fitted at each one of the free ends of the pylon assembly (7).

The pylon assembly includes fasteners positioned in order to prevent sliding of pylons between each other, and with respect to surrounding structure.

Another advantage of the invention, is that in case of damage of the pylon, the boxes can be easily replaced by new ones.

Other preferred embodiments of the present invention are described in the appended dependent claims and the multiple combinations threreof.

## Claims

1. Aircraft pylon assembly, comprising first and second elongated boxes, aligned longitudinally with respect to an axis (X) and assembled to each other,
wherein the first box has an outer section and an inner section, the inner section having an empty configuration,
wherein the second box has an outer section and an inner section, wherein the inner section is inserted inside the inner section of the first box,
and wherein the first and second boxes are configured such as the inner section of the second box is tightly fitted inside the inner section of the first box, thereby preventing relative angular movement between the first and second box with respect to the axis (X).

2. Pylon assembly according to claim 1 wherein the first and second boxes are configured, such as the shape and dimension of an outer contour of a cross-sectional area of the second box inner section, substantially match an inner contour of a cross-sectional area of the first box tubular inner section, so that the inner surface of the first box inner section and the outer surface of the section box inner section are in contact.

3. Pylon assembly according to any of the preceding claims, wherein the first box inner section and the second box inner section are configured as parallelepipeds.

4. Pylon assembly according to claim 1 or 2, wherein the first box inner section and the second box inner section are configured as trapezoids.

5. Pylon assembly according to any of the preceding claims, wherein the first box has at least a first spar internally fitted thereto, the second box has at least a second spar internally fitted thereto, wherein both spars are longitudinally aligned at the pylon assembly.

6. Pylon assembly according to claim 5, wherein the first spar is shorter than the first box and extend from the first box outer end, and wherein the second spar extend from the second box inner section.

7. Pylon assembly according to any of the preceding claims, wherein the first and second boxes are joined to each other to prevent of the first and second boxes from sliding longitudinally.

8. Pylon assembly according to any of the preceding claims, obtained from a carbon fiber composite material.

9. Aircraft fuselage section, comprising at least two frames and a pylon assembly according to any of the claims 1 to 8 attached to the frames, wherein the inner sections of the first and second boxes, are placed inside the fuselage section.
